# EUROPEAN PATENT APPLICATION

(11) **EP 1 146 760 A2**
(43) Date of publication of application: **17.10.2001**
(21) Application number: 00119458.8
(22) Date of filing: 14.09.2000
(51) Int. Cl.: H04Q 7/36

(54) **Apparatus and method for adaptive channel allocation in a cellular telephone system**

(30) Priority: 11.04.2000 US 546680
(71) Applicant: ScoreBoard, Inc., Herndon, Virginia 20171 (US)
(72) Inventor: Arpee, John, c/o Score Board, Inc., Herndon, Virginia 20171 (US)
(74) Representative: Prato, Roberto

(57) **Abstract**

A process which utilizes actual received signal level data gathered from closely spaced locations covering an entire cellular system to calculate interference levels at each location. The process determines those base stations which most probably communicate with a mobile unit at each particular location, compiles a list of neighbor base stations for each base station at each location throughout the system and calculates interference levels at each base station for a variety of channel assignment to each base station. The process allocates channels to various cells on an adaptive basis to minimize interference and maintain call quality. Minimizing interference requires a cost evaluation of all resulting interference from implementation of a particular channel allocation. Data which indicates the actual strengths of all signals to be transmitted by a plurality of cells each positioned at an individual physical position in a mobile communications system and to be received by a mobile unit at a plurality of points of an entire mobile communications system is collected and utilized to establish a relational data matrix. The system relating data indicating the actual strengths of all signals to the physical positions from which the signals are to be transmitted, identifying cells transmitting signals likely to serve each point of the plurality of points, and comparing planned frequencies to be used at any position serving a point with planned frequencies to be used at other positions to identify cells transmitting signals which might interfere with signals transmitted by cells serving a point and to identify least likely interference patters for channel reuse.

## Description

### BACKGROUND OF THE INVENTION

The present invention relates to cellular telephone systems and to modeling cellular telephone systems for the allocation of channels to the different cells within a wireless telecommunications system for optimizing utilization of the available overall radio spectrum. More particularly, the present invention relates to fixed and adaptive channel allocation in radio communication systems with an interference matrix developed and maintained for utilization by a mobile telephone switching office.

The service area of a wireless communications system is partitioned into connected service domains known as cells, where radio telephone users communicate, via radio links, with the base station serving the cell. The cells can be further partitioned into segments. The base station is coupled to the land line network.

Presently available commercial mobile communication systems typically include a plurality of fixed cells each of which transmits signals to and receives signals from mobile units within its communication area. Each base station is assigned a plurality of channels (each 30KHz wide) within a frequency spectrum over which it can communicate with mobile units. A mobile unit within range of the base station communicates with the base station using these channels. Typically, the channels used by a base station are separated from one another in some manner (typically skipping 1, 7 or 21 intermediate channels) sufficiently that signals on any channel do not interfere with signals on another channel used by that base station. To accomplish this, an operator typically allots to a base station a group of channels each of which is widely separated from the next. So long as a mobile unit is within the area in which the signal from a base station is strong enough and is communicating with only that base station, there is no interference with the communication.

In order to allow mobile units to transmit and receive telephone communications as the units travel over a wide geographic area, each cell is normally physically positioned so that its area of coverage is adjacent to and overlaps the areas of coverage of a number of other cells. When a mobile unit moves from an area covered by one base station to an area covered by another base station, communications with the mobile unit are transferred (handed off) from one base station to another in an area where the coverage from the adjoining cells overlaps. Because of this overlapping coverage, the channels allotted to the individual cells are carefully selected so that adjoining cells do not transmit or receive on the same channels. The channels used by adjoining base stations are also theoretically separated from the channels of each adjoining base station sufficiently that signals from any base station do not interfere with signals from another adjoining base station. This separation is typically accomplished by assigning a group of widely separated non-interfering channels to some central cell and then assigning other groups of widely separated non-interfering channels to the cells surrounding that central cell using a pattern which does not reuse the same channels for the cells surrounding the central cell. The pattern of channel assignments continues similarly with the other cells adjoining the first group of cells. When a cell is sufficiently removed from another cell to theoretically avoid interference, the two cells may use some of the same frequencies or channels. When two cells in the same system use the same frequencies, the pattern is often called a channel reuse pattern.

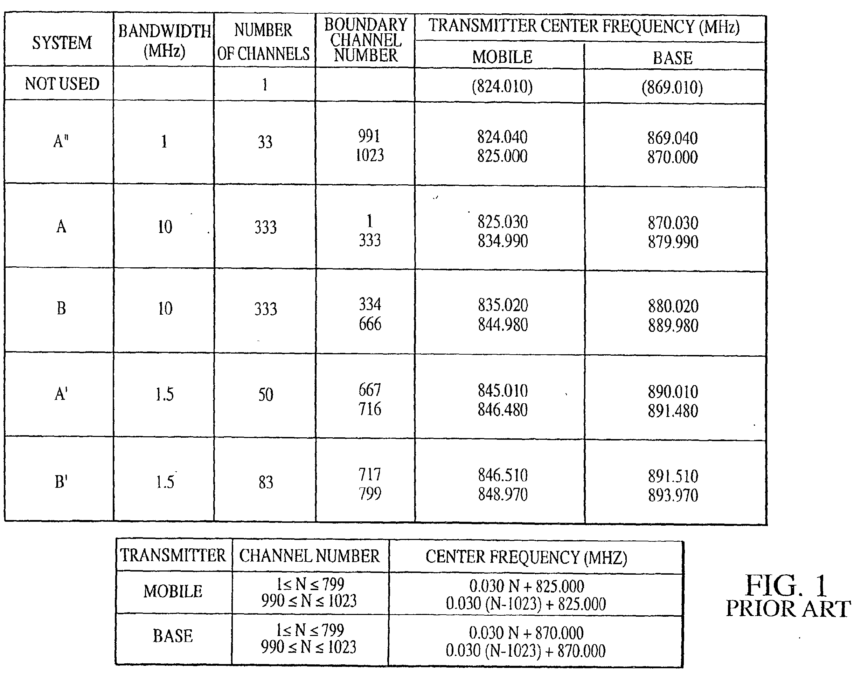

There are a number of different types of mobile communications systems. Channels are defined in different manners in each of the different systems. The design and operation of such a system is described in an article entitled Advanced Mobile Phone Service by Blecher, IEEE Transactions on Vehicular Technology, Vol. VT29, No. 2, May, 1980, pp. 238-244. Commonly known as the AMPS system, this system had allocated to it by the FCC a block of the UHF frequency spectrum (824MHz to 894MHz) further subdivided into pairs of narrow frequency bands called channels. At present there are 832 channels, each 30 kHz wide allocated to cellular mobile communications in the United States. A table of the frequencies dedicated to mobile communications in the U.S. is illustrated in Figure 1. Of the 832 available channels, there are 21 control channels dedicated each to the A-carrier and the B-carrier. These 42 control channels provide system information and cannot be used for voice traffic. The remaining 790 channels, known as voice or traffic channels, carry voice and/or data communication.

In a typical AMPS system, each channel uses a fixed FM frequency band width of 30 KHz for down-link transmission from a base station to a mobile unit and another fixed FM frequency band width of 30 KHz for up-link transmission from a mobile unit to a cell. Typically, the frequencies assigned to the down-link transmissions for an entire cellular system immediately adjoin one another and are widely separated (by 45 MHz) from the frequencies assigned to the respective up-link transmissions which also immediately adjoin one another.

Since channels are defined by frequency in an AMPS system, each base station is allotted a single a set of channels with frequencies which are each separated from one another sufficiently to eliminate interference between those channels. In some AMPS systems, especially those with cells in urban areas carrying heavy traffic, each cell may be further divided into two, three or more sectors each of which may include channels having the above-described frequency allotment of channels. Each sector may include its own transmission equipment the antennas of which provide 180, 120 or less degree coverage, respectively. Dividing cells into sectors allows closer spacing of cells and therefore allows for greater density of mobile units, allowing a system with a fixed geographical area to accommodate a greater number of users.

Although the channels allotted to the individual cells are carefully selected so that adjoining cells do not transmit or receive on the same frequencies, it is very difficult to eliminate all interference in a system where channels are based on differences in frequencies. Antenna patterns, power levels, scattering, and wave diffraction differ from cell to cell. Buildings, various other structures, hills, mountains, foliage, and other physical objects cause signal strength to vary over the region covered by a cell. Consequently, the boundaries at which the signal strength of a channel falls below a level sufficient to support communications with a mobile unit vary widely within a cell and from cell to cell. For this reason, cells adjacent one another do not, in fact, typically form precise geometric boundaries. Because the boundaries of cells are imprecisely defined, signals will often interfere with one another even though they are generated by cells which are at distances theoretically sufficient to eliminate interference. This is especially true when a sectored cell pattern is used because the cells are much closer to one another than in a simple cell pattern.

In another common type of mobile system called Time Division Multiple Access (TDMA), frequencies are assigned to the entire system in groups much like those of an AMPS system. However, each frequency can be further time divided into additional channels within each frequency. Each base station sends and receives in bursts during some number of different intervals or time slots. These time intervals within frequency bands then effectively constitute the individual channels. Individual channels in a frequency increases the use capacity of a cell.

A CDMA system transmits messages digitally. All transmissions in a CDMA system are on the same frequency spectrum so the digital signals constituting each message must somehow be recognizable from all of the possible transmissions available. To accomplish this, the digital messages are encoded by a series of overlaid digital codes. One of these codes, called a pseudorandom noise (PN) code, is applied to all transmissions throughout a CDMA system. The PN code is used to encode the individual bits of the original message at the transmitter and to decode the encoded message at the receiver. In order to recognize messages from a particular base station, each base station uses a distinct time offset (Called a PN offset) from some repeating initial time to begin encoding the transmission using the PN code. Thus, one base station may begin an encoded transmission at the initial time, a second base station at an offset of one unit from the initial time, a third at an offset of two units from the initial time, and so on up to a total of 512 offsets.

Each transmission between a mobile unit and a base station is also placed on what is effectively a separate channel by further encoding the transmission with one of a plurality of Walsh codes. A message encoded using a Walsh code, as with a PN code, can only be decoded by the same Walsh code at the receiver. Thus, an encoded transmission on a particular channel is decoded by applying a mask including both the Walsh and/or PN codes to the received pattern of information bits commencing at the PN offset designated for the particular base station.

A base station normally has sixty-four Walsh codes available for defining channels on which it can establish transmissions with mobile units, certain of the channels are preassigned to function as control channels. For example, in order to advise mobile units of the particular PN offset used, each base station continuously broadcasts the PN code using its assigned PN offset on one of the channels (a pilot channel) defined by Walsh codes. Mobile units monitor this preassigned pilot channel. When a mobile unit finds an offset at which a pilot is decodable, it refers to another control channel (a synchronization channel) to determine the initial time and thereby identify the PN offset of the base station. Each system also maintains a paging channel upon which indications are posted that new messages are arriving. A total of nine channels are provided for these and other control functions.

In order to allow mobile units to transmit and receive telephone communications as the units travel over a wide geographic area, each base station is normally physically positioned so that its area of coverage is adjacent to and overlaps the areas of coverage of a number of other base stations. When a mobile unit moves from an area covered by one base station to an area covered by another base station, communication with the mobile unit is transferred (handed off) from one base station to another base station in an area where the coverage from different base stations overlaps.

In most other types of cellular communication systems, a mobile unit communicates with only one base station at a time. However, since all transmissions in a CDMA system take place on the same frequency spectrum, a mobile unit actually has available all of the information which is within its range. However, it only decodes information on PN offsets and Walsh code channels which are directed to it. A CDMA mobile unit uses a receiver which is able to apply a number of decoding masks simultaneously at different offsets of the entire spectrum of information which it receives. At present, a mobile receiver may decode as many as six PN offsets at once. However, usually only three PN offsets are used to decode messages while the others decode control information. Because a mobile unit in a CDMA system may be receiving the same information from a number of different base stations at the same instant, it may decode information from a single message sent to it from a number of different base stations simultaneously using different PN offsets and Walsh codes and combine that information to produce a single output message. Thus, while a signal transmitted from one base station may be fading, the same message may be being received with adequate strength from another base station. This allows a CDMA system to offer the possibility of significantly better transmission. The situation in which a mobile is communicating with a number of base stations at once is called "soft handoff".

In order for a system operator to allocate resources to a cellular telephone system intelligently, the operator typically models the system. In order to utilize the advantages offered by CDMA technology, an operator should be able to model the system accurately. However, because a CDMA system can involve a plurality of base stations each communicating with the same mobile unit simultaneously, much more data must be dealt with and more resources have been required than are available to accurately model such a system. This has led to the use of probability techniques which utilize only a small number of locations throughout the system and extrapolate between those locations. This has produced less than accurate results leading to incorrect allocation of assets.

Efficient use of the available radio frequency spectrum when channels are defined by frequency offset can be increased through the reuse of the same radio frequencies in designated co-user cells that are sufficiently separated by distance so that the combined interference generated by all co-user cells is below tolerable levels. The assignment of radio frequencies to cells has been based on regularity assumptions (i.e., equal-sized regularly-spaced cells with uniformly distributed traffic loads), which enable the adoption of simple rules for identifying co-user cells, and for partitioning the RF spectrum into channel sets. When the regularity assumptions do not hold―as is frequently the case in real world situations―the rules of regular channel assignment do not lead necessarily to the efficient utilization of the RF spectrum, if they can be applied at all. Accordingly, a channel assignment approach, known as non-regular channel assignment, has evolved for optimal utilization of the RF spectrum, which requires a solution of the non-regular channel assignment problem. Both regular and non-regular channel assignment approaches belong to class known as fixed channel assignment, which is characterized by a fixed relationship between cells and the channels serving them. Only the channels allocated to a cell can serve calls in that cell, and each channel can be used simultaneously by all the cells to which the channel is assigned.

In theory, these forms of cell arrangement and channel assignments allows channel reuse patterns to be repeated at distances separated sufficiently to negate interference between mobile units on the same and adjacent channels. They also allow signals used by the different cells in a particular system to be strong enough to provide complete coverage of the system area. However, interference and insufficient coverage do occur.

Antenna patterns, power levels, scattering, and wave diffraction differ from cell to cell. Buildings, various other structures, hills, mountains, foliage, and other physical objects cause signal strength to vary over the region covered by a cell. Consequently, the boundaries at which the signal strength of a channel falls below a level sufficient to support communications with a mobile unit vary widely from cell to cell. For this reason, cells adjacent one another do not, in fact, typically form the precise geometric boundaries suggested above. Since cell boundaries must overlap to provide complete coverage of an area and the boundaries of cells are imprecisely defined, overlapping coverage often occurs between channels which might interfere with one another.

Another reason that interference and insufficient coverage can occur in the various mobile systems is that the various factors in the system may change over time. Various components of the system may deteriorate or fail in some way so that cells operate at less than optimum. Also, physical characteristics of the topography of the cell system may change. Building come and go and vegetation changes. This may reduce the signal strength provided by certain cells thereby changing the patterns from those originally planned for the system. Such pattern changes reduce coverage in some areas and may cause undesired overlap of signals from remote cells. Component failures may be rapid or slow. Antennas are often physically damaged or misaligned. This can cause a lower level response or actually shift the antenna pattern. Connections loosen or otherwise become less than optimum so that lower levels of current are transferred. Any number of other causes may affect the level at which a cell transmits, the direction of that transmission, or other characteristics of the transmission. When a cell is transmitting or receiving at less than optimum, the tolerances expected in the system may no longer exist thereby causing spurious signals to reach the same level as desired signals.

The transferring of a communication with a mobile unit from one cell to another is accomplished by a process referred to as a "hand-off." Each cell site has a scanning receiver which measures signal levels sent from a mobile unit. When the received signal strength falls below a threshold level, a cell connected to a mobile unit sends a message to a switching center which controls the area covered by the cell. The switching center includes software which maintains data tables which list the switching thresholds, channels assigned to cells, and the positions of the cells in the system. The switching center sends a message to the neighboring cells which overlap the cell connected to the mobile unit asking the neighboring cells to use their scanning receivers to measure the signal level being sent by the mobile unit on the particular channel. The neighboring cells each measure the signal level and also measure some identification signal (e.g., a supervisory audio tone which is sent in an AMPS system on the channel at a frequency above the level of the audio of the mobile channel) to identify the signal from a particular mobile unit. All of the cells report back the signal levels received to the switching center. The switching center software determines whether any neighboring cell is receiving a stronger signal from the mobile unit than the cell presently carrying the mobile transmission. If a cell is receiving a significantly stronger signal (set at a value determined by the switching software), the switching software signals the serving cell to notify the mobile unit to switch to a new channel. The switching software sends another message to the neighboring cell receiving the stronger signal telling it to commit a new channel to the mobile. The first connection is disabled, and the mobile unit tunes to the new channel.

To carry out this hand-off process, the signal levels provided at the boundaries of adjacent cells must each be strong enough to support transmission; or the transmission with a mobile unit will be interrupted. Since the pattern around each cell defined by the signal strength just insufficient to support transmission with that cell is not a neat geometric shape, overlapping occurs in widely varying patterns. The odd shaped boundaries of the individual cells and the necessity that the cells overlap means that signals on the same channel will often interfere with one another even though they are generated by cells which are at distances theoretically sufficient to eliminate interference. This is especially true when a sectored cell pattern is used because the cells are much closer to one another than in a simple cell pattern.

Interference can take the form of co-channel interference, when a first signal on a channel from a remote cell interferes with a second stronger signal carrying a mobile transmission on the same channel within the coverage area of a cell. Interference is defined when the drop in signal strength between the signals is less than some threshold level (typically measured in decibels). Moreover, signals on adjacent channels are carried by abutting cells in accordance with the above-described frequency reuse pattern. These signals can cause adjacent channel interference. Although each signal is restricted to a 30KHz band width, some spillover outside the assigned band width is experienced. Typically, frequency filtering is insufficient to eliminate adjacent frequencies entirely; consequently, there may be adjacent channel interference. A signal from another cell on a channel at a frequency adjacent the frequency of a channel carrying a mobile transmission interferes when the strength of the adjacent channel signal is greater than a second threshold level compared to the second signal. When the drop in strength of the interfering signal from the serving signal is less than some second usually higher threshold level; normally an adjacent channel may be closer in strength to a serving channel because frequency filtering eliminates some substantial portion of the adjacent frequency signal.

In order to overcome interference when designing or improving the coverage of a mobile cellular system, it has been typical for a cellular system operator to use predictive software to determine what signal strength is to be expected from each of a particular set of cells. This software utilizes data describing the physical characteristics of the terrain surrounding each cellular site and the physical characteristics of the cellular station to plot expected signal strengths around a cellular site. These signal strength predictions are then overlaid on a graphical plot to determine where antennas should be placed to provide optimum coverage with appropriate overlapping areas for hand-offs. Deciding upon optimum coverage may require that the operator move the points at which individual cells are positioned and use the predictive software to replot expected signal strengths around a cellular site to eliminate expected interference. Once the antenna sites have been determined, the operator assigns channel groups to the cells in accordance with the technique described above.

It is possible that expected interference cannot be eliminated by overlaying signal strength predictive plots; and the operator may place test antennas in position using the results of these predictive mappings and testing to determine if actual interference exists. Alternatively, the predictive plots may predict that no interference is likely to occur, and the operator may place the antennas to be used in the system. The operator may later find that interference, in fact, occurs at some positions and test to determine how to eliminate the interference. The determination of whether interference actually exists and where it exists is made by drive tests which measure signal strength of channels at the positions either where a graphical plot shows that interference might occur within the cellular system area or where interference has been reported. Since the predictive software provides only an educated guess at the actual signal strengths produced by the channels at a cell, the points at which interference is predicted are often inaccurately placed. In fact, the predictive software provides an estimation of signal strength with a typical error having a standard deviation of 8 dB. This error is very large compared to the required design tolerances which may range from 3 dB to 17 dB.

During the drive tests to determine actual interference, a single channel at each cell or sector of a cell involved in the interference testing is enabled. A mobile unit with a scanning receiver drives over the roads and highways of the system. The scanning receiver scans and measures the strength of the frequency transmitted by each cell at the points of possible interference as the mobile unit moves. This provides strength measurements of signals generated by each cell at each test point. These strength signals are then plotted on the graphical plot against the cells from which they are believed to emanate. Thus, the expected interference points on channels from different cells which actually interfere with one another may be viewed graphically to determine whether sufficient interference exists to change the channel group assigned to the particular area. As may be seen, this requires a substantial amount of time and limits the interference determination to those points at which a system operator expects to find interference, an expectation the accuracy of which is very suspect.

If the number of points of interference for a cell are sufficiently great, the patterns of channels are changed. That is, the frequency group assigned to a cell (or cells) is typically changed in its entirety to another frequency group in which channels which would interfere with channels carried by other cells do not occur. Sometimes, interference may be eliminated by changing the cell characteristics (such as antenna tilt or power used in particular cells) without changing the channels used. Once channels have been assigned to cells which provide acceptable coverage and expected interference has been eliminated, the system is fixed and operated.

This method of placing cells, assigning frequencies, and eliminating interference is quite slow and labor intensive. Moreover, it does not provide a complete understanding of interference which actually exists in a system since typically only those positions at which prediction software leads the operator to believe that interference may exist are tested to determine whether interference actually exists. In addition, whenever the physical pattern of individual cells in a system changes, the computation of predicted cell coverage, graphical plotting of predicted cell coverage, drive testing to check actual interference, actual interference plotting, and assessment of actual interference takes place over again. This is a very labor intensive process which greatly increases the costs of creating and maintaining mobile systems without guaranteeing that interference will be eliminated. Because of the emerging nature of the market for cellular telephones, those system changes are taking place constantly and at an accelerating rate.

Partially in response to the limitations of fixed channel assignment and also in order to increase capacity, a new classification has been developed known as flexible or adaptive channel assignment. Such adaptive channel assignment methods, exploit the capability of a system for remote, software-driven, retuning of the base station radios, which capability enables channel capacity to adapt to traffic variation.

Fixed channel assignment, as noted, includes both regular channel assignment, which is optimal for a system with traffic distributed uniformly across cells, and non-regular channel assignment, which will be applied when the traffic distribution is not uniform. An optimal non-regular channel allocation methodology allocates channels to cells according to their traffic load. Such an optimal non-regular channel assignment will outperform regular channel assignment.

Adaptive channel allocation, or ACA, is a method of dynamically allocating frequencies throughout a cellular system to increase system capacity and adaptability. Under an ACA scheme, more frequencies would be reallocated to busy cells from more lightly loaded cells as usage and demands varied. In addition, the channels can be reallocated such that all links have satisfactory quality. A common feature of ACA systems is that they allocate a channel out of a set of channels which fulfills some predetermined quality criteria. However, different ACA schemes select channels from the set based upon different criteria.

Although adaptive channel assignment methods exploit the capability of a system for remote, software-driven, retuning of the base station radios, which capability enables channel capacity to adapt to traffic variation. A concern here is with short-term variations. One example of such short-term variation is the variation due to the random nature of calls, which causes the number of calls in different cells to be different even though their average over time remains constant. Another variation of interest is due to a trend change; that is, a change in the average number of calls per cell. Such a change may occur either expectedly (sometimes repeating regularly, as during the daily rush hour) or unexpectedly.

The concept of ACA is well-known to those skilled in the art, and its potential has been described in various publications. For example, *"Capacity Improvement by Adaptive Channel Allocation",* by Hakan Eriksson, IBEE Global Telecomm. Conf., Nov. 28-Dec. 1, 1988, pp. 1355-1359, illustrates the capacity gains associated with a cellular radio system where all of the channels are a common resource shared by all base stations. In the above-referenced report, the mobile measures the signal quality of the down-link, and channels are assigned on the basis of selecting the channel with the highest signal to interference ratio (C/I level).

Another approach is described by G. Riva, *"Performance Analysis of an Improved Dynamic Channel Allocation Scheme for Cellular Mobile Radio Systems",* 42nd IEEE Veh. Tech. Conf., Denver, 1992, pp. 794-797 where the channel is selected based on achieving a quality close to or slightly better than a required C/I threshold. Furuya Y. et al., *"Channel Segregation, A Distributed Adaptive Channel Allocation Scheme for Mobile Communications Systems",* Second Nordic Seminar on Digital Land Mobile Radio Communication, Stockholm, Oct. 14-16, 1986, pp. 311-315 describe an ACA system wherein the recent history of link quality is considered as a factor in allocation decisions. In addition several hybrid systems have been presented where ACA is applied to a small block of frequencies on top of an FCA scheme. Such an example is presented in Sailberg, K., et al., *"Hybrid Channel Assignment and Reuse Partitioning in a Cellular Mobile Telephone System",* Proc. IEEE VTC '87, 1987, pp. 405-411.

This feature of ACA is particularly attractive when system changes are implemented, when new base stations are added, or when the environment changes, for example by the construction or demolition of large buildings.

It is desirable to provide a process by which interference between cellular telephone system channels operating at the same frequency and/or adjacent frequencies may be accurately predicted over each entire cell of an entire system based upon dynamic information corresponding to in-use performance and for adaptively reallocating channels based upon the in-use interference performance to maximize capacity while minimizing overall interference within the system.

### SUMMARY OF THE INVENTION

Improved performance of a cellular system is achieved by the present invention which allocates channel assignments in an adaptive channel allocation system based upon a data set of information assembled from actual and predicted interference scores. The present invention utilizes actual received signal level data gathered from closely spaced locations covering an entire cellular system to calculate interference levels at each location. The present invention can utilize a data gathering system and method such as that described in co-pending patent application 08/648,998, incorporated herein by reference. This patent application describes apparatus and methods for effective signal data collection for establishing a data set for implementation of interference evaluation and for execution of the present invention. Minimal gaps in gathered data can be filled by predictive algorithms with increased accuracy based upon a near complete data set. The assembled data set allows the adaptive assignment of channels to cell cites or cell cite sectors. The base station with the highest probability of communication with a mobile unit at each particular location is determined based upon the data set. A list of neighbor base stations for each base station at each location throughout the system is compiled and a determination of the transmit power necessary for each base station to communicate with a mobile unit at each location is made. The interference levels at each base station are calculated and a determination of the transmit power necessary for a mobile unit at each location to communicate with each base station which most probably communicates with a mobile unit at that particular location is made.

Because the cellular system embodies adaptive channel allocation, no permanent assignment of channels need be made to any individual cell or cell sector. Channels are assigned and reassigned on the basis of minimal overall system interference. In the event that changes in usage or coverage requires a reassignment of channels within the cellular system, the algorithm of the present invention is utilized to determine the interference effect on the system of reassignment of channels or groups of channels. The interference scores for each pair of co-channel and adjacent channel assignments in both the up-link and down-link direction are summed to determine a total interference score for each potential reassignment. In order to be evaluated as a potential reassignment, a reassignment would first need to meet a minimum interference score. A reassignment exceeding the minimum interference score may create an overall degradation in call quality unacceptable even as a trade off for increased capacity. All assignments meeting the minimum score criteria are compared and the reassignment with the minimum total interference score for the system is implemented.

The evaluation criteria of the present invention can also include a disruption factor. Reassignment of a channel from a first yielding cell to a second receiving cell can require retuning a call on the transferred channel at the first cell. The evaluation criteria may determine that the best channel to be transferred from the yielding cell to the receiving cell may be a channel which is already carrying a call at the yielding cell. Although one embodiment of the present invention will transfer that channel on the basis of minimal interference criteria, regardless of the potential momentary disruption of retuning the call to a different channel at the yielding cell, a second embodiment of the present invention will weigh the cost of retuning against the cost difference between the least interference channel reassignment and the next least cost channel reassignment.

In order to minimize future reassignments, the present invention considers factors relevant to the likely future interference of a current reassignment and considers the likely future reassignment because of a current assignment. A current reassignment from a low traffic cell to a high traffic cell may result in denial of service at the yielding cell in the near term. Alternatives to reassignment, such a power reduction to minimize interference are weighted in the decision of the present invention in assessing channel reassignments. The cost of degrading call quality based on signal reduction is weighed against the cost and near future cost of channel reassignment.

Because a cellular system collects data on operational parameters such as effective radiated power to adjust the transmit power of mobile units, the information collected may be utilized to augment the data set from which the interference matrix is developed. Information from ERP changes or handoff information can be utilized to update interference criteria. This data is collected over the control channels and indicative of in use conditions within the system. The data is input into the data set and later utilized to alter the interference matrix.

The present invention also allows for consideration of physical changes to the system without the immediate need for additional collection of actual field data. The interference matrix use for channel allocation evaluation is updated by applying decreased statistical significance to data collected prior to any physical reconfiguration. As described above, physical changes can include antenna repositioning, construction of large buildings, significant changes in surrounding vegetation, alterations in operating power levels and the like. Physical changes can have varying effects on signal propagation and on differing portions of the signal field of an antenna dependant on signal overlap and edge areas.

In another embodiment of the present invention, call assignment as well as channel assignment is subject to relative cost evaluation prior to assigning a call to a particular channel. When a call is being assigned to a cell, either as at initiation of a call or as a handoff, the interference effect of the up-link transmission from the mobile unit is factored as a weight in assignment of a channel to the call. The effect of low power assignment on both the call and the interference matrix is also evaluated to determine if the call is best established on a first channel at low power or on a second channel at a higher power.

The acquisition of additional data on the live operating parameters are incorporated into data set updates. Improved data allows for simulations and analysis of the interference matrix under various predictive load conditions. Simulations results can be used to assemble look up tables for real time implementation and utilization by the mobile telephone switching office to accommodate actual operating conditions as they arise.

These and other features of the invention will be better understood by reference to the detailed description which follows taken together with the drawings in which like elements are referred to by like designations throughout the several views.

### BRIEF DESCRIPTION OF THE DRAWINGS

Figure 1 is an illustration of the allocated cellular frequency spectrum.
Figure 2 is a diagram of a portion of a cellular telephone system.
Figure 3 is a graphical view of signal strength data obtained in drive tests for evaluating the arrangement of cells and channels within cells in a system such as that of Figure 2.
Figure 4 is a flow chart illustrating a process in accordance with the present invention for predicting interference in a system such as that illustrated in Figure 2.
Figure 5 is an illustration of the manner of practicing a second embodiment of the invention.
Figure 6 is a probability curve used to evaluate the likelihood of a base station providing a received signal having a particular ratio of signal-to-interference level serving a particular location.

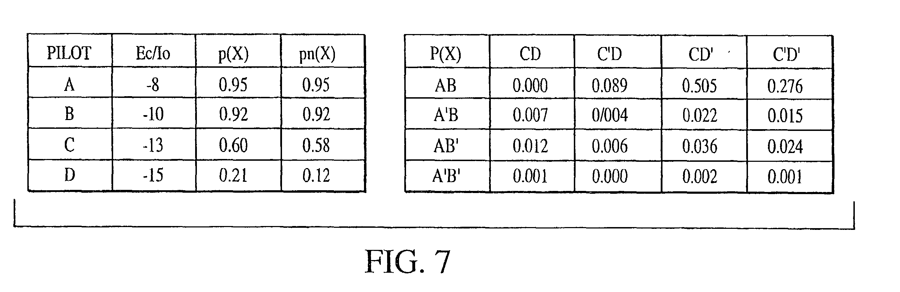

Figure 7 is a diagram illustrating probabilities for receipt of signals from each possible group of base stations at a location within a cellular telephone system.
Figure 8 illustrates an exemplary process in accordance with the present invention for initial establishment of the interference matrix.

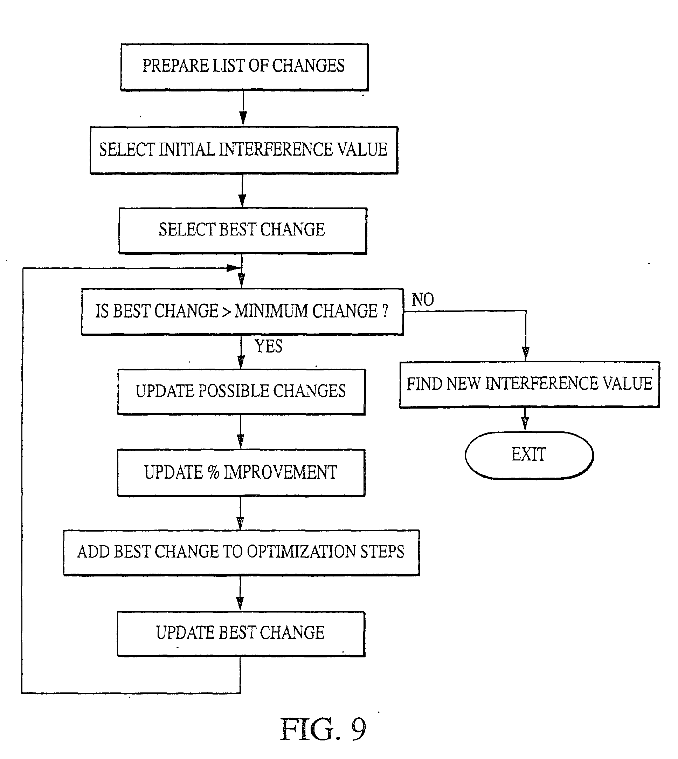

Figure 9 illustrates an exemplary process for implementing channel reassignment in accordance with the present invention.
Figure 10 is a first logical diagram illustrating exemplary evaluation criteria for selection of the lowest interference score channel reassignment.
Figure 11 is a second logical diagram illustrating additional evaluation criteria for selection of the lowest interference score channel reassignment.
Figure 12 is a third logical diagram illustrating additional evaluation criteria for selection of the lowest interference score channel reassignment.

### DETAILED DESCRIPTION OF EXEMPLARY EMBODIMENTS

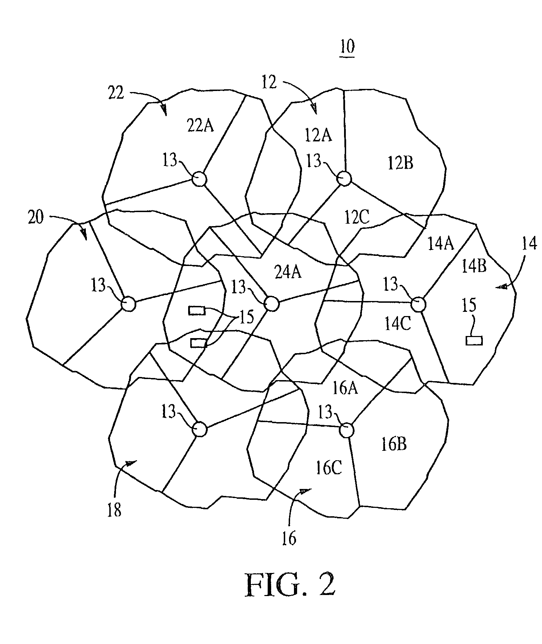

Figure 2 illustrates a portion of an exemplary cellular system including a plurality of cell sites with base stations each divided into three segments by use of directional antennae. The sites could be divided into any number of segments including a single segment per cell, three segments are illustrated only for the sake of example. A first cell site 12 has a base station 13 with three antennae sectors which divide cell 12 into segments 12A, 12B and 12C. Adjacent to cell 12 is cell 14, also divided into three segments of 120° each. Similarly, cells 16, 18, 20, 22 and 24 are divided into segments A, B and C. The cells, 12 through 24 overlap to provide effective coverage in the region of the cellular system illustrated in Figure 2.

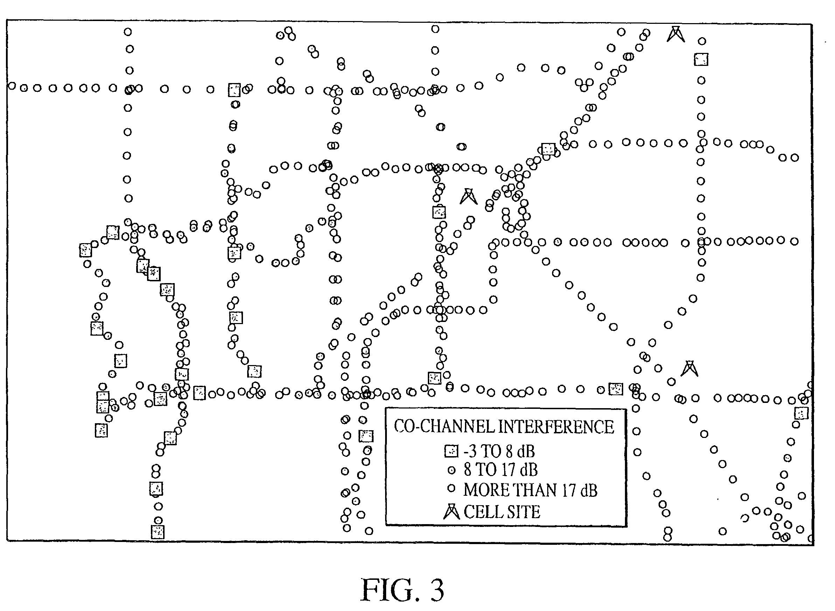

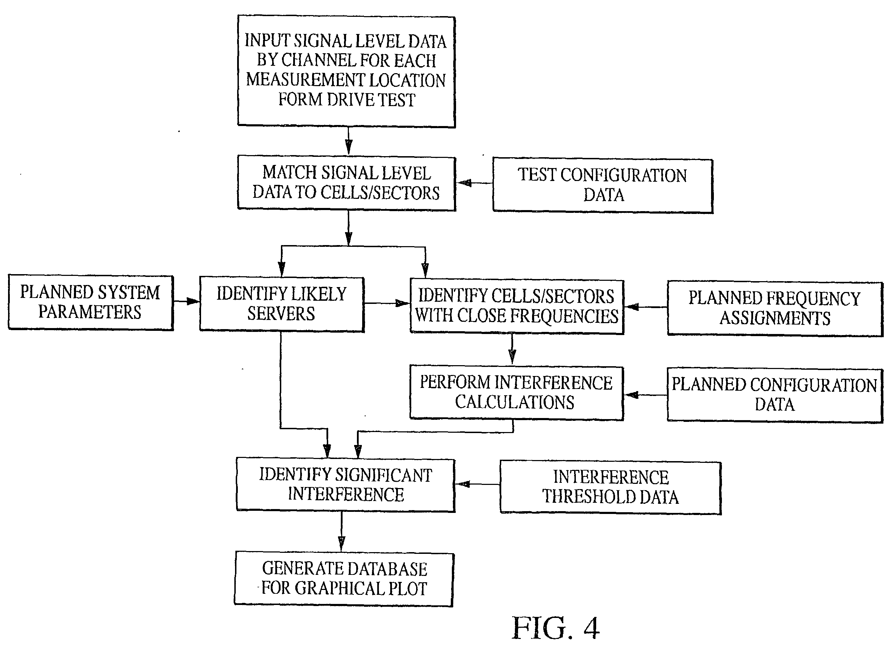

As detailed in copending applications, a statistically significant number of measurements are taken throughout the cellular system as illustrated in Figure 3 to determine the relative signal strength between each base station and each mobile unit location. The probability of interference between cell segments is determined and an interference matrix is established by a process as illustrated in Figure 4. The process of the present invention is then utilized to assign frequencies to each segment of each cell in the system.

For example, the interference matrix would indicate a high probability of interference between segments 24B and 16A. Therefore, common channels would not be assigned to segments 24B and 16A. Alternatively, segments 16B and 22A would likely have a low interference quotient on the interference matrix and therefore the process could assign common channels to the segments. Once assigned, the distribution of frequencies and channels is assimilated into the data set and used to update the interference matrix for implementation of channel reassignments.

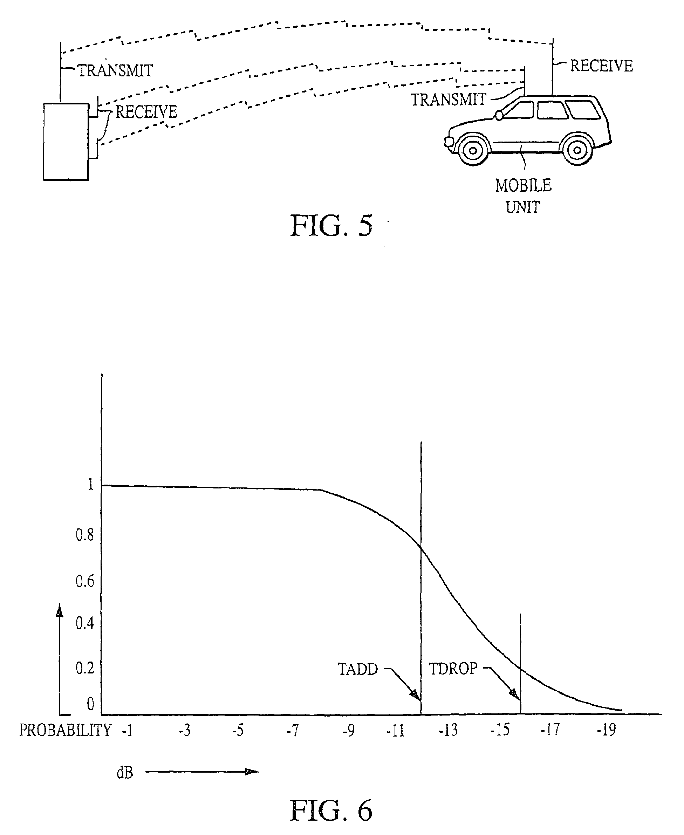

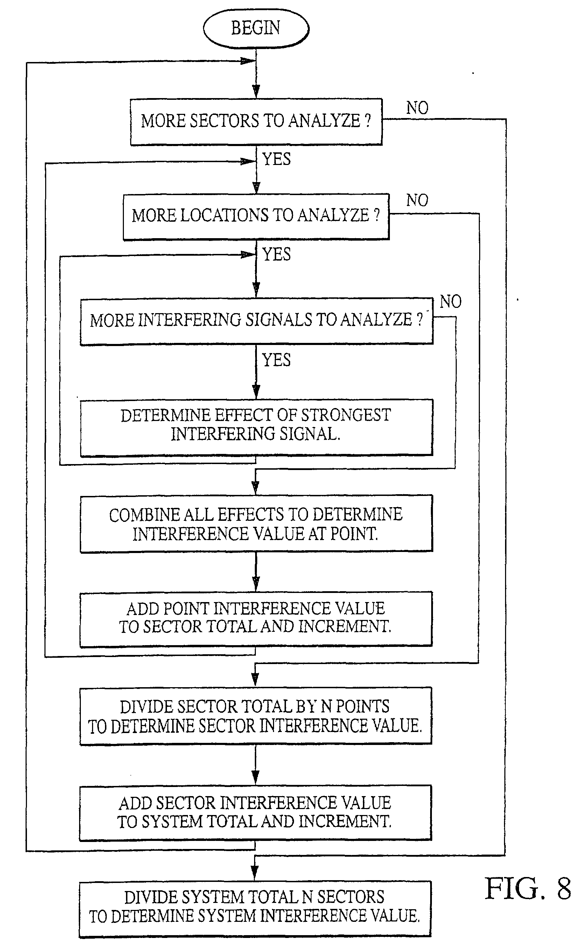

The initial distribution of channels is accomplished, after determining which base stations may be serving a location. A probabilistic test is applied in accordance with the present invention in the manner illustrated in Figure 8. Utilizing a probability curve such as that illustrated in Figure 6 (derived from data for the system) which evaluates the likelihood of a base station providing a received signal at a particular location having a particular ratio of signal-to-interference level (Ec/Io), the probability of each individual base station serving the location may be determined. For any location, the Ec/Io ratio may be determined as detailed in the co-pending applications for the appropriate system (AMPS /TDMA / CDMA) Where more than one base station may serve a mobile location, the probability for each of the base stations individually is determined. Then, the probability for each possible group of those base stations from which discernible signals have been received may be obtained by multiplying the probabilities for each individual base station being received in the group by the probabilities of all others in the group and by the probabilities that all base stations not in the group will not be received.

The determination of cellular signal strength and overlap at actual physical locations is made by drive tests which measure signal strength of channels at the positions where the graphical plot generated by the predictive software shows that interference might occur within the cellular system area. Since the predictive software used presumes general characteristics derived from similar terrain and cells to determine cell coverage, overlap such as the overlap of cells into the boundaries of non-adjacent cells is often not predicted. Consequently, signal strength measurements of test frequencies generated by each cell are taken only at the test points where interference is expected and may entirely miss interference which actually occurs. These signal strength measurements are then plotted on the graphical plot against the cells from which they emanate. As may be seen, this process requires a substantial amount of time and limits the interference determination to those points at which a system operator expects to find interference.

If the points of interference are sufficiently great, the groups of channels assigned to the cells are changed. This is accomplished by determining at any point whether interference greater than an acceptable level exists. If interference exists, it may be tested again by more drive tests. However, if interference is ultimately found to exist in an area which is expected to carry significant traffic, the groups of channels assigned to the cells are changed. The frequency group assigned to a cell (or cells) is typically changed in its entirety to another frequency group in which charmels which would interfere with channels carried by the other cells do not occur. Sometimes, interference may be eliminated by changing the cell characteristics (such as antenna tilt or power used in particular cells) without changing the groups of channels used. Once channels which provide acceptable coverage have been assigned to cells and expected interference has been eliminated, the system is fixed and operated.

This operation is slow, labor intensive, and does not provide a complete understanding of interference which may actually exist. Moreover, whenever the physical pattern of individual cells in a system changes, the generation of predictive patterns of probable cell coverage, the graphical plotting of expected cell strength patterns, the drive testing to determine whether expected interference actually exists, the plotting of actual interference determined by the drive tests, and the assessment of interference takes place over again. This is a very labor intensive process which greatly increases the costs of creating and maintaining mobile systems without guaranteeing that interference will be eliminated.

The present invention overcomes the problems of the prior art by providing a process by which measured signal level data for an entire system is utilized to provide predictive plots which may be utilized to establish cell site positions and channel assignments. The process allows plots and channel assignments to be easily changed at minimal cost whenever a system undergoes changes or is updated, including during channel reassignment during use.

In one embodiment, the process begins with a drive test of the entire system area. In the drive test for this embodiment, a single channel at each projected cell site or sector of a cell is transmitted; and a different channel is transmitted by any other cell in the test area. If an entirely new system is being designed, expected cell sites may be selected in any of a number of different ways such as by use of prior art predictive plotting software; and then test transceivers may be placed at the proposed cell site positions. If a cellular system already exists, then the cell sites which exist may be used along with any proposed new test sites. A mobile unit with a scanning receiver drives over all of the roads and highways of the area to be changed in the system. The roads include those which make up all of the most likely reception points of the entire communication system. Thus, it would not be necessary to drive four wheel vehicle trails unless it was expected to serve mobile units on those trails. The scanning receiver constantly scans and measures the strength (usually received signal power) of each channel transmitted from each of the cell sites as the mobile unit moves. The mobile unit also includes equipment (such as Loran or Global Positioning System (GPS) equipment) which constantly records the position of the mobile unit as each set of strength measurements is taken. This provides strength measurements of frequencies generated by transmitters at all of the cell sites proposed to be included in the system which can be received at any point in the service area over which the mobile unit drives. By transmitting from each cell on a single channel, interference which might complicate the readings is eliminated; that is, none of the transmitted signals should interfere with any other transmitted signal so that the cell from which any channel is transmitted is positively known. These signal strength measurements are recorded in a database with the position at which they were recorded by equipment in the mobile unit as the test continues.

The data in the database is then compared with data which indicates the characteristics of the cells (especially the channel being transmitted by each cell) during the test. This generates a database which indicates the cell or sector from which each signal received by the mobile unit was sent. The database may be used to generate a graphical plot of the actual signal strengths of each of the cells (or sectors) in the cellular system. The signal strength pattern if plotted from points taken over the entire area could be made to produce a plot such as that illustrated in Figure 3. In any case, the cellular strength graphical plot will illustrate actual, rather than projected, signal strengths.

It should be noted that if the signal strength data for an area is compiled from more than a single drive test, the data from all of the drive tests must be combined and the individual tests weighted to account for changes in the system and to provide grater weight to more recent tests so that the data of each drive test matches that of other drive tests. Thus, for example, if higher transmission power was used in one drive test than in another, then the strength values would need to be scaled (typically linearly) to provide data having the same significance. The data collected from one drive test may also be "combined" with previously collected data from other drive tests if the new data represents only a portion of cells in the network. This step is useful when economics or operational issues preclude collecting data for the entire network or proposed network all at once. Combining is also useful when adding new cells to a network so that the effect of new cells may be determined without having to re-collect data for the entire network.

Because the measuring process is not strictly controlled, data collected in different drive tests will be at slightly different locations even though the same routes are driven. The combination process uses a variety of methods to relate data samples that are near each other from differing drive tests and create a composite data sample. In one embodiment, each data sample is combined with other data samples within one hundred feet of each other. Redundant channel measurements are averaged together. In another embodiment a propagation model is used to interpolate missing channel measurements from channel measurements near the current location. At this point, the process compares the data for each channel received at each point in the entire area with the data for all other channels received at the point to determine at any point which cells should serve the point. These cells are called 'likely servers.' A number of criteria may be used.

A cell is a likely server at a particular location if there is a non-trivial probability that a cell will provide the transmission path to or 'serve" a mobile unit at that location. The methods used to determine likely servers can be simple or very complex. Given below are three likely server methods. More are possible.

The simplest likely server method identifies as likely servers all cells that serve a location with a signal strength within 3 dB of the strongest signal strength for that location. A more advanced likely server method accounts for signal path imbalances which have been discovered caused by network hardware and software settings to determine likely servers for each location. Such a method may balance the up-link and down-link strengths where they vary, may bias certain strength determinations in favor of particular cells, or provide other adjustments to match the particular area of the system. A third likely server method provides specific tests for each different type of network hardware and accounts for network configuration and control information (e.g. how mobile unit hand-off is performed) as well as signal path imbalances to determine likely servers for each location.

For example, using the first of these methods, the strongest frequency is chosen from a group of all channels within 3 dB of the strongest channel at each point. In general, all channels transmitting at any cell provide, on an average, signals of the same strength at any given point so long as the test frequencies of the channels are within approximately ten percent of the frequencies to be used. Thus, the strongest frequency at a point typically designates the cell to serve that point; while frequencies transmitted by adjoining cells received at the point within the 3 dB range typically define a hand-off (overlap) area. Other more sophisticated methods of selecting a cell to serve a point may be used to force traffic onto a certain cell, for instance.

The relationships of the signal strengths of the likely servers at each test position in the cellular system from all of the cells are then associated with the channels proposed for each cell to determine if the proposed channel selection causes either co-channel or adjacent frequency interference. The cells serving the points of an area are known, and the proposed channel selection data for each of the cells or sectors may be associated with those cells. Since the points at which any particular channel transmitted from one cell will have a certain strength and may interfere with signals from another cell may be determined from the signal strength data which has been collected, such a determination may be made for each proposed channel for any drive test. The determination is usually made by subtracting the signal strength in dB of each signal received at each point on a channel which might interfere with a channel carried by the cell serving the point from the signal strength of the signal serving the point in dB. The desired cell serving at each point has already been determined from the test to determine cells serving a point. For co-channel interference in the AMPS system, if the difference is less than 17 dB, interference exists. For adjacent channel interference in the AMPS system, if the difference is less than from 3 to 6 dB (depending on the criteria used), interference exists. If there is interference at any point in the system, the pattern of channel assignments and other cell configuration information (such as effective radiated power (ERP)) may be changed; and the actual signal strength database may be run against the new cell channel assignments. This requires no new testing or other operations by the operator, simply running the software until channel selections which exclude interference are determined.

A plot like that illustrated in Figure 3 showing this possible interference information may be prepared which illustrates the points at which interference would occur were the proposed channels to be utilized in the system.

Not only may the inventive process be used to update or plan a new system, the process also allows signal strength measurements derived from drive tests conducted using a particular type of cellular system such as an American Mobile Phone System to be used for determining coverage and interference patterns for cell sites which utilize entirely different types of systems. This has the advantage of allowing drive test results accumulated from an older system be used to predict interference which may occur in newer types of systems which might be installed at the same sites. The same signal strength test results may be utilized as a system is changed in any manner. The new channel assignments may be tested by the software against the signal strength measurement database to derive new predictions of interference. If additional cells or sectors are to be added, this may be accomplished by drive tests for signals from the new cells only. These may be added to the signal strength measurement database and the updated database used to determine new channels to be used. The cost of placing cells and assigning channel groups is reduced drastically by use of the process of the present invention.

Figure 4 is a flow chart illustrating in detail the operation of one embodiment of a process in accordance with the present invention. As may be seen, data representing the actual signal strengths of frequencies received at each position on the streets, highways, and roads of a cellular system area at which a drive is reasonably able to be conducted is furnished as input to the program. This drive test data typically includes the signal strength of all frequencies measured at each position of the drive tests. Each data point may also include a time of test indication, the channels received, the geographic coordinates of the test point, and a list of the signal level measurements taken. In a particular case, the list may include the level of all channels received at the point or a list of the level of all channels received at the point which are over a particular level.

The drive test information is compared with a database indicating the channels which were functioning at each cell during the drive test. This database may also include power levels, antenna direction, and other significant data regarding the test configuration which may be compared later in the program to determine whether changes in these factors may be changed so that signals received on frequencies planned to be used will not actually interfere. This provides a signal level matched to cell or sector output database. The signal level matched to cell or sector output database is transferred to a process which identifies the likely servers for each signal position. This process may be of any of a number of different types. For example, it may determine for any geographic position which cell provides the strongest signal and use that as the likely cell to serve the position. It may then also include all other cells which provide signals having a strength within 3 dB of the strongest signal. On the other hand, the process may manipulate the signals received to utilize a particular cell in a particular area whenever possible in order to direct traffic to a particular cell or sector.

The signal level matched to cell or sector output database is also transferred to a process which reviews the frequencies at each point and introduces the planned frequency assignment data for cells servicing the point to determine frequencies which might interfere. Those frequencies which might interfere are then transferred to a process which compares the signal levels of channels serving a point to signals levels of interfering signals. This latter process may utilize input data defining configuration data for each of the cells including planned power levels and antenna tilt. The result of the process is an interference level calculation for frequencies which serve any point of the cellular system.

The results of this process are transferred to a process which utilizes the interference threshold algorithms to determine whether any interference is significant. The result is a database which may be graphically plotted to show the cellular system with all significant interference. Any significant interference points may then be eliminated by providing new channel selections for the cells to replace the previously planned frequency assignments and running the program again. Various characteristics of the cells may also be changed to determine the effect on interference. This process may continue until significant interference is eliminated.

A second embodiment of the invention provides substantial economies over the first embodiment in situations in which a new system is being designed. In this second embodiment, when a system is being planned, general areas in each of which a site might be positioned are first determined in some manner. For example, this may be done by using prior art predictive software as in the previous embodiment. A problem encountered in designing new systems is in selecting one particular position for a site from a number of possibilities in the same general area where a number of different positions may appear feasible. In order to determine which position is better suited before acquiring the site, the method of the first embodiment of this invention would conduct drive tests with transmitters placed at each of the possible sites. Such a drive test for each of the individual sites might take as long as one day if a number of individual positions are possible at each site. Thus, for an entire area, drive tests might take many days.

In the second embodiment which is generally illustrated in Figure 5, the drive tests are conducted by placing a single transmitter in a mobile unit and using fixed receivers (rather than expensive scanning receivers) at all of the proposed positions at each of the sites over an extensive area for which new cells are proposed. The mobile unit drives over the roads encompassed by the new cells transmitting on a single frequency while all of the receivers attempt to detect the transmission. The power level transmitted by the mobile antenna is measured at the mobile unit once or more times sufficient to assure that it is known accurately. A GPS or other positioning system is linked to the mobile unit to provide position indications at each point of measurement. The transmitter sends a signal at the selected frequency, and all of the receivers measure its strength. The position indications of the mobile unit may be transmitted by the mobile unit with each of the test transmissions and received by the receivers at the proposed sites. Alternatively, the positions may be recorded in a database by the mobile unit with the times of the transmissions; and the times of reception may be recorded by each receiver with the signal strength received (e.g., using computers connected to record the signal strengths received at each proposed site). The signal strength received at a cell site from the mobile transmitter in an up-link transmission is on an average the same as the signal strength which would be received at a mobile unit from a cell site in a down-link transmission. If the down-link transmission is at a different effective radiated power than the up-link transmission used for collecting data, the collected data is adjusted by simply multiplying one or the other to compensate. Consequently, the data gathered by the drive test in this second embodiment may be directly substituted for the data gathered in the drive tests for the previous embodiment. However, the drive tests of the second embodiment provide significant economic advantages over those used in the first embodiment. First, scanning receivers need not be used since only a single frequency is used for all transmissions to the sites. Each receiver requires computer equipment for recording the data. Only a single test transmitter is necessary instead of transmitters at each of the sites.

More importantly, an entire area could be covered in a single drive test since the number of frequencies available does not limit how many stations may be tested at once. The only limit to the testing is the distance of stations from the mobile unit. Thus, labor costs are substantially reduced. Consequently, a single drive over the entire area is all that is necessary to both select a site and to gather all of the data necessary to accurately determine interference between all of the stations of the area being planned. If enough test equipment is used, by using more than one mobile unit and different frequencies for the different mobile units and for the sites which each mobile unit tests, an entire system may be tested in a single day compared to the weeks of testing required by prior art methods.

The data, once gathered using this second embodiment, is utilized in a manner essentially identical to the method of the first embodiment. The method illustrated in Figure 4 may be utilized in the same manner. As has been illustrated, the invention offers a number of substantial advantages over the prior art. This process allows the complete testing of a system frequency plan before any changes are made in the physical structure of a cellular system and essentially eliminates the time consuming human element from the process of determining interference between channels. The process also allows a complete determination of actual interference over the entire cellular system to be conducted within a very short period of time and eliminates most unsuspected interference.

The drive test data, once collected and analyzed, provides a relative scoring of the interferences between the antennae in the cell system. This scoring can be used to rank the relative interferences between antennae and to selective from least cost interference configurations of channel distributions among the antennae of the cell system. The relative predictive interference scores derived above and incorporated into the interference matrix of the present invention can then be effectively utilized to reassign channels with the least cost effect on potential interference.

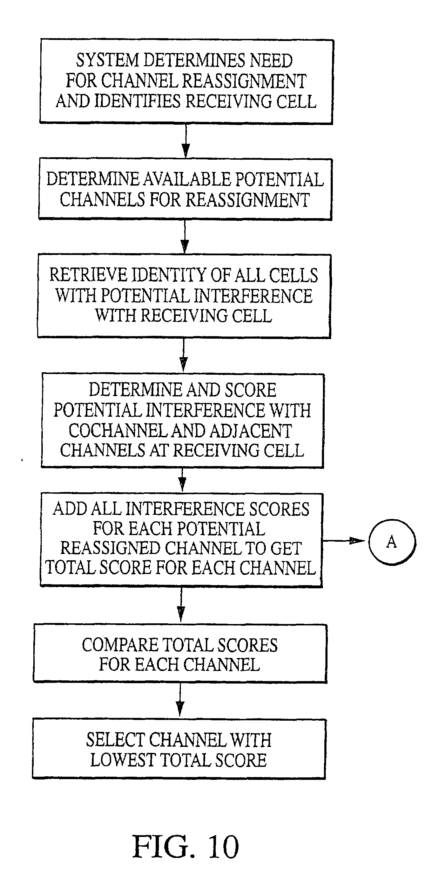

When reassigning a channel between two cells, or cell segments, in a first embodiment, a minimal interference criteria is set and the systems accepts the first reassignment which met the minimal criteria for reassignment. In an alternative and preferable embodiment, the total interference scores for any channel reassignment is evaluated and the lowest score of all evaluated reassignments is accepted. As illustrated in Figure 10, to determine the total interference score, the interference of each pair of co-channel and adjacent channels for each potential reassignment have to be evaluated. The up-link interference and the down-link interference must be scored and then the total score must be compared. The up-link interference evaluation should include consideration for the power level of the mobile unit transmit. The drive tests have determined the cells with potential interfering with the receiving cell and this information is part of the system matrix. The channels on those cells are also known to the system. The interference score is then based upon an evaluation of this information. Depending upon the cell site distribution and the interference distribution detected in drive testing, the proposed channel reassignment may effect only a few or a large number of cell pair to be evaluated.

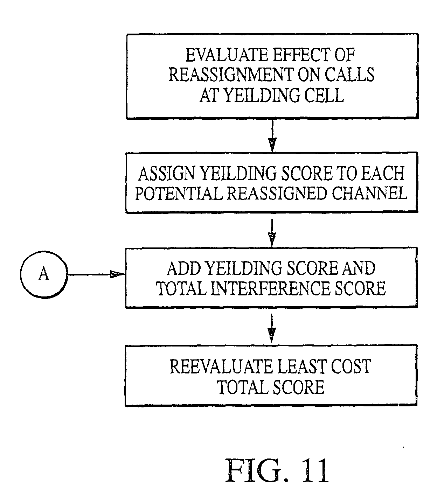

As an additional criteria, as illustrated in figure 11, an evaluation of the cost of retuning a call at the yielding cell which is utilizing the reassigned channel can be made. This cost is then added into the current interference score and the lowest total score is reevaluated to determine the least cost reassignment. The costs of retuning can include the interruption cost to the ongoing channel use and factors such as call volume load at the yielding cell.

In an alternative embodiment, the matrix developed by the drive test method may be updated when changes in ERP are detected or when the data send over the SACCH indicate alterations in received power levels. Data collected prior to adjustments in systems architecture or changes in system performance are maintained with less statistical significance than dat updated for such changes.

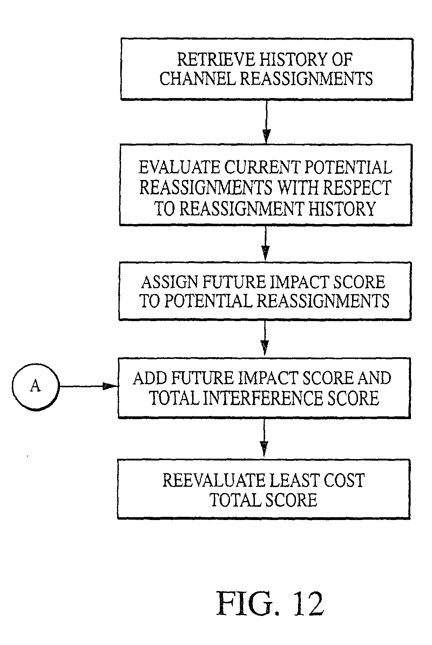

Additionally, the system can assess the interference score and system cost of reassignment in likely future demands on channel use. Channel use patterns from previous reassignments are maintained by the system as a layer within the reassignment matrix. Mobile use traffic can be evaluated and predicted from the use history to provide criteria for evaluation of the effects of reassignment future use demands for the reassigned channel. As illustrated in Figure 12, the system can evaluate if the reassignment from a yielding cell at a current time is likely to result in that cell needing a channel in the near future. The cost of reassigning a channel form that yielding cell is factored into the total cost score and compared against other potential reassignments to again evaluate the least cost score for reassignment.

Although the present invention has been described in terms of preferred embodiments, it will be appreciated that various modifications and alterations, might be made by those skilled in the art without departing from the spirit and scope of the invention. The above-described exemplary embodiments are therefore intended to be illustrative in all respects, rather than restrictive, of the present invention. Thus the present invention is capable of many variations in detailed implementation that can be derived from the description contained herein. All such variations and modifications are considered to be within the scope and spirit of the present invention as defined by the following claims.

## Claims

1. A system which utilizes actual received signal level data gathered from closely spaced locations over an entire cellular system at which a mobile unit is likely to communicate with base stations to calculate interference levels at each location, comprising the steps of:
identifying base stations which most probably communicate with a mobile unit at each particular location;
compiling a list of likely interfering base stations for each identified base station at each location throughout the system;
determining the probable likely transmit signal power received from each identified base station by a mobile unit at each location;
comparing the probable likely transmit signal power of likely interfering base stations at each location;
identifying actual interfering base stations and assigning corresponding interference scores indicative of the likelihood and magnitude of interference between respective identified base stations;
establishing an interference matrix corresponding to said calculated base interference scores; and
assigning channels to said base stations in accordance with said interference matrix to minimize base station interference;
monitoring said system for channel reassignment requests; and
reassigning a channel from a yielding base station to a receiving base station in response to reassignment requests based upon a reassignment determination made in accordance with said interference matrix to minimize base station interference.

2. The system of Claim 1, further including:
identifying potential reassignment channels; and
evaluating each potential reassignment channel for interference caused by reassignment.

3. The system of Claim 2, wherein said interference matrix includes:
interference scores for each evaluated potential reassignment channel.

4. The system of Claim 2, further including:
evaluating the impact of each reassignment on the yielding base station, including the assignment of disruption scores for loss of reassigned channels from respective yielding base stations.

5. The system of Claim 4, wherein said reassignment determination is based upon combined interference and disruption scores for each potential reassigned channel.

6. The system of Claim 1, wherein said reassignment determination includes:
an evaluation of the effect of reassignment on said yielding station, including an evaluation of the impact of momentary call interruption at the yielding base station.

7. The system of Claim 1, wherein said reassignment determination includes:
a determination of the total interference scores for any potential channel reassignment; and
selection of the lowest score of all evaluated potential reassignments.

8. The system of Claim 7, wherein said total interference score determination includes:
the interference of each pair of co-channel and adjacent channels for each potential reassignment;

9. The system of Claim 7, wherein said total interference score determination includes:
an evaluation of the cost of retuning a call at the yielding cell which is utilizing the reassigned channel.

10. The system of Claim 7, wherein said total interference score determination includes:
an evaluation of the score of future costs to the cellular system in subsequent reassignment of the potential reassigned channel.

11. The system of claim 1, further including:
updating said interference matrix, based upon alteration of conditions of said cellular system, including applying decreased statistical significance to data collected prior to said alteration to said cellular system.

12. The system of claim 1, further including:
updating said interference matrix, based upon the acquisition of additional data on the live operating parameters conditions of said cellular system, including applying decreased statistical significance to data collected prior to said data acquisition.
